# EUROPEAN PATENT SPECIFICATION

(11) **EP 3 531 741 B1**
(45) Date of publication and mention of the grant of the patent: **02.06.2021**
(21) Application number: 18305202.6
(22) Date of filing: 26.02.2018
(51) Int. Cl.: H04W 28/02, H04W 48/04, H04W 48/06, H04W 48/12

(54) **METHOD AND APPARATUS FOR PROVIDING CONTROL ACTIONS FROM A CONTROLLER TO A RADIO ACCESS NETWORK**
VERFAHREN UND VORRICHTUNG ZUR BEREITSTELLUNG VON KONTROLLAKTIONEN VON EINER CONTROLLER ZU EINEM FUNKZUGANGSNETZ
PROCEDE ET APPAREIL POUR FOURNIR DES ACTIONS DE CONTROLE D'UN CONTROLEUR A UN RESEAU D'ACCES RADIO

(43) Date of publication of application: 28.08.2019
(73) Proprietor: Nokia Technologies Oy, 02610 Espoo (FI)
(72) Inventor: BEDEKAR, Anand, Glenview, IL 60026 (US); FILIATRAULT, Charles, Candiac, Québec J5R6X6 (CA); PICQUET, Philippe, 91310 LONGPONT SUR ORGE (FR); SALVADOR, Omar, Wheaton, IL 60189 (US); STEPHENS, Paul, Long Grove, IL 60047 (US)
(74) Representative: Nokia EPO representatives

(56) References cited:
- CN-A- 101 977 416
- US-A1- 2011 058 480
- US-A1- 2013 215 742

## Description

### Field

The present application relates to a method, apparatus, system and computer program and in particular but not exclusively to a controller providing control actions to a radio access network.

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). US patent publication no. 2011/0058480 relates to core network processing load reduction. US patent publication no. 20130215742 relates to extended access barring (EAB) signalling for a core network (CN) and node. Chinese patent publication no. CN 101 977 416 relates to Overload control method and system of MTC (Machine Type Communication) equipment.

### Summary

According to an aspect there is provided a method according to claim 1, a method according to claim 6, an apparatus according to claim 9, an apparatus according to claim 10, a computer program produce according to claim 11 and a computer program product according to claim 12. Some example embodiments are defined in the dependent claims.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example communication system comprising a base station and a plurality of communication devices;
Figure 2 shows a schematic diagram of an example mobile communication device;
Figure 3 shows a schematic diagram of an example control apparatus;
Figure 4 shows a schematic diagram of an example xRAN architecture;
Figure 5 shows a flow chart of a method according to an example;
Figure 6 shows a flowchart of a method according to an example;
Figure 7 shows a signalling flow of a method according to an example.

### Detailed description

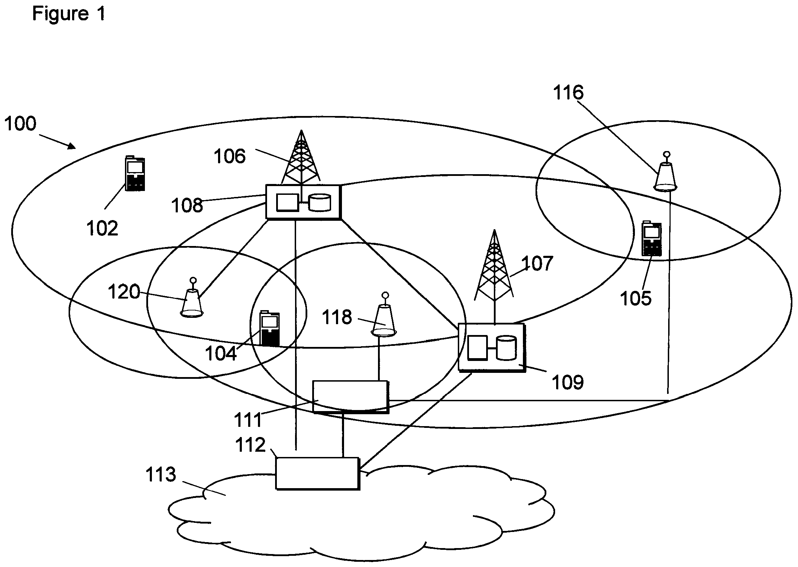

Before explaining in detail the examples, certain general principles of a wireless communication system and mobile communication devices are briefly explained with reference to Figures 1 to 3 to assist in understanding the technology underlying the described examples.

In a wireless communication system 100, such as that shown in figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area.

An example of a suitable communications system is the 5G or NR concept. Network architecture in NR may be similar to that of LTE-advanced. Base stations of NR systems may be known as next generation Node Bs (gNBs). Changes to the network architecture may depend on the need to support various radio technologies and finer QoS support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

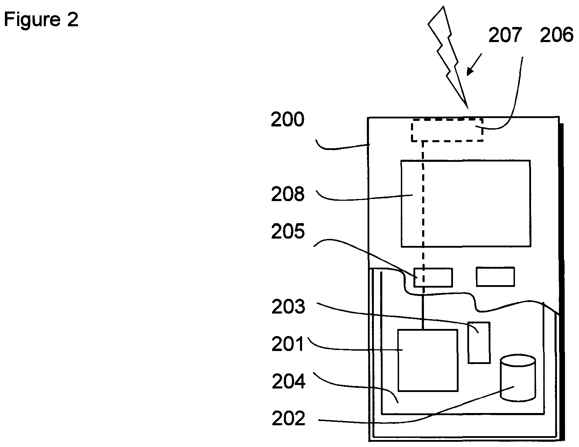

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

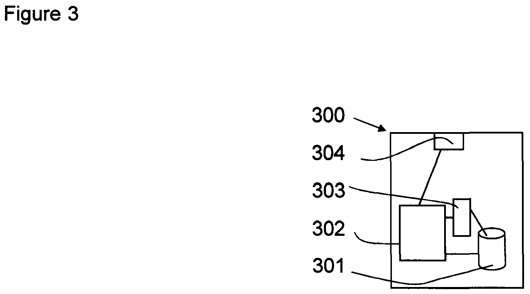

Figure 3 shows an example of a control apparatus for a communication system, for example to be coupled to and/or for controlling a station of an access system, such as a RAN node, e.g. a base station, eNB or gNB or a node of a core network such as an MME or S-GW, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

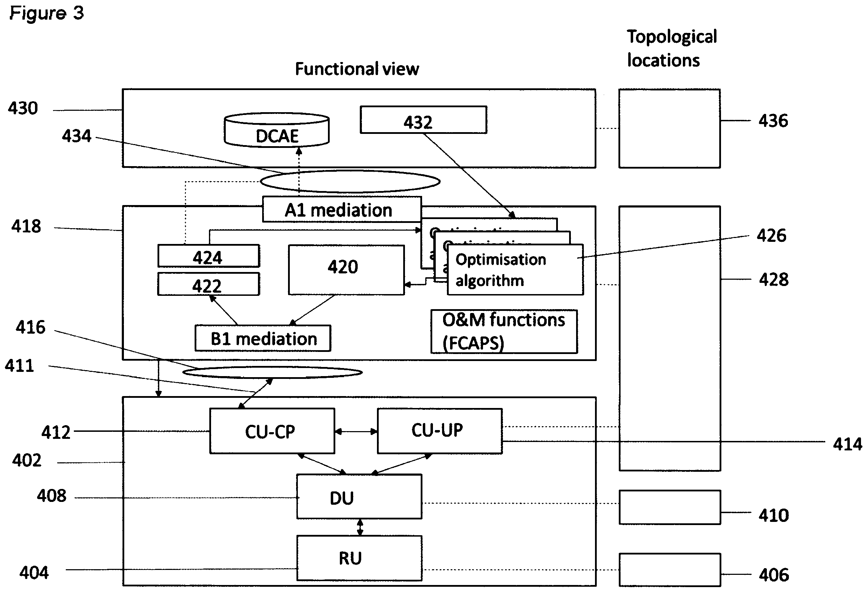

The RAN may interact with a controller that will provide various control (and/or optimization) actions for RAN functions to the RAN over "B1 reference point". xRAN defines an architecture where the RAN will interface to a controller over a B1 interface. Figure 4 shows an example xRAN architecture. The system comprises a RAN Node 402 which may be a gNB or another RAN node such as eNB etc. The RAN node 402 may comprise various interfaces or functional units: RU (radio unit) 404 which may be hosted at a cell site 406; DU (distributed unit) 408 which may be hosted at a CRAN (cloud RAN) hub or cell site 410; CU-CP (central unit - control plane) 412; and CU-UP (central unit - user plane) 414. The CU-CO and CU-UP may be hosted at a Central Office (CO) or edge data centre 428.The units are in communication with each other as schematically shown by the arrows in Figure 4.

The RAN node 402 is in communication with, and may be controlled by, Controller 418. The RAN node 402 may comprise an interface or Application Programming Interface B1 411 towards the Controller 418. Communication between RAN node 402 and controller 418 may be via a reference point 416 which may be labelled B1. The Controller 418 may comprise the following functional units shown schematically: control API 420, which may send control information to RAN node 402 (e.g. to CU-CP 412); data gathering/processing unit 422, which may gather data from the RAN node 402 (e.g. may receive information from CU-CP 412) and provide stream processing or in-memory database facilities; analytics or Machine Learning (ML) toolkits 424; services performing RAN operations or optimization algorithms 426. The xRAN controller may be realised using a real-time database for data gathering, analytics and RAN optimisation as micro-services. In this example the controller 418 may be hosted at a Central Office (CO) or edge data centre 428.

A policy node is schematically shown at 430. This may be an Orchestration/Policy Engine, such as an Open Network Automation Platform (ONAP). The policy node 430 may comprise a policy database or processing engine 432 and an analytics system which may be referred to as DCAE, which may provide the policy node capabilities of storing and processing historical data and applying centralized policy. In this example the policy node 430 is in communication with xRAN controller 418 via a reference point 434 which may be known as A1. In this example the policy node 430 is hosted at a central cloud, shown schematically at central cloud 436.

Control (and/or optimization) actions may include load-balancing (intra- and inter-frequency). For example, a controller 418 may provide the RAN node 402 with target load values, or with handover offsets (Cell Individual Offset (CIO)) values for certain neighbor cells etc. that are used to control the RAN's load-balancing actions Admission Control.

Admission control is another example of a control action. The controller 418 may provide the RAN node 402 with modifiers that change various thresholds or resource projections etc. that, for example, make the RAN's admission control more permissive or less permissive

Physical channel (e.g. PUCCH, SRS) sizing/assignment may be a control action provided to the RAN node 402 by the controller 418. For example, for PUCCH, a controller 418 may provide RAN node 402 with an allowed number of PUCCH PRBs or a bitmap of allowed PRBs, along with indicators to whether existing UEs' PUCCH assignments should be reconfigured to adapt to the updated configuration.

The actions provided by the controller 418 may apply to all users in a cell or RAN node (eNB or gNB). In some cases the controller 418 may provide control actions for individual UEs.

A control action may comprise various specific parameters such as threshold values or metric values or other parameters that influence the actions invoked by the RAN or messages communicated by the RAN towards UEs.

It may be desirable to enable the controller 418 to provide different control actions or different parameters for certain control actions that the RAN should apply not to all UEs in a cell/RAN node or to individual UEs, but rather to certain groups or subsets of UEs. For example, the controller 418 may wish to provide different target values, load thresholds or handover offsets etc. to different groups of UEs. This may allow the Controller 418 to effect different behaviors or performance characteristics for different groups or subsets or classes of UEs, and achieve a better overall system performance or other target. The following provides solutions to enable such differentiated behaviour or performance for different classes of UEs.

Groups (or classes) of UEs may be identified based on various criteria, as discussed below. A group or class may be a subset of all the UEs in a cell/RAN node, i.e. the group or class may comprise less than the total number of UEs in a cell/RAN node.

As an example, groups may be based on RF/channel quality characteristics. Cell-edge UEs (e.g. UEs with a measured CQI or RSRP/RSRQ less than a threshold) may be grouped together and Cell-center UEs (e.g., UEs with a CQI or RSRP/RSRQ greater than a threshold) grouped together.

Groups may be based on mobility characteristics. Low-mobility UEs (e.g. UEs with a "variability of CQI" less than a threshold, "timescale of variability of CQI" less than a threshold, or "number of handovers within current RRC Connection" less than a threshold) may be classified. A corresponding classification may be made for high mobility UEs.

Groups may be based on traffic type. For example, a group may comprise UEs with a particular type of traffic/bearer/QoS category (e.g. VoLTE UEs with a QCI1 bearer or other QCI type or VoLTE traffic or UEss with OTT high-bitrate videos) These UEs may be identified by probes or DPI if the RAN does not have visibility of traffic type.

Groups may be based on Slice identifier or slice type. For example, in 5G, a standardized identifier of slices called NSSAI is being defined. NSSAI may consist of a Slice/Service Type (SST) (which may indicate, for example, MBB or IOT or URLLC, or other operator-specifiable values) and a Slice Differentiator (SD) which may indicate, for example, a tenant ID. The classification criteria for determining whether a UE belongs to a particular slice type or slice identifier may be based on the SST or SD or NSSAI.

Groups may be based on location. For example, UEs near a particular shopping area or train station etc. (such UEs may be identified either by location info or RF fingerprinting). Groups may be based on subscription / tenant / slice identifier. Groups may be based on accounting information or user data consumption information (e.g. high-data-usage UEs vs low-data-usage UEs). Groups may be based on CEM (customer-experience management) or customer-acquisition information (high-churn-risk UEs).

Groups or classes may be defined as collections of bearers rather than collections of UEs, or variously as mixtures of UEs and bearers. A UE or bearer may belong to one class or more than one class.

The following may provide a method to enable flexible ways of identifying the class or classes to which a UE and/or bearer belongs. The following may enable the classification decision for a given class or UE or bearer to be flexibly performed at the RAN or the Controller 418. The Controller 418 may have certain capabilities for making such classification decisions, such as a database or policy configuration, whereas the RAN may have its own capabilities for executing such classification decisions.

The RAN may have its own internal way of classifying UEs and the controller 418 may classify the UEs in a different way. In some cases, the RAN may have certain information natively, based on which, the RAN can perform the classification. In other cases the RAN may not have sufficient information.

Some RANs (eNB/gNB) may not have enough processing power to be able to execute classification. However, depending on the latency between the RAN and controller 418, having the Controller 418 perform classification of UEs may not be desirable.

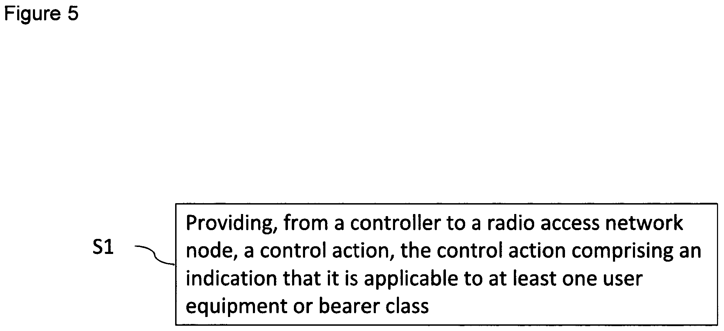

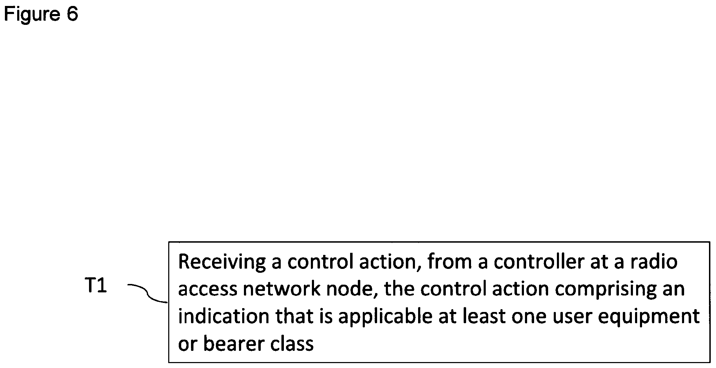

Figures 5 and 6 show a flowchart of a method which may enable a controller 418 and RAN node 402 to support applying control actions to different classes/groups/subsets of UEs. Further, optional, steps of a method as described with reference to figures 5 and 6 may support the ability for either the RAN node 402 or the controller 418 to do the classification.

In a first step, S1, the method comprises providing, from a controller to a radio access network node, a control action, the control action comprising an indication that the control action is applicable to at least one user equipment or bearer class.

The method may comprise determining, at the controller, whether a user equipment belongs to the at least one user equipment or bearer class and providing, from the controller to the radio access node, an indication of whether the user equipment or bearer belongs to the at least one user equipment or bearer class.

Whether a user equipment or bearer belongs to a user equipment or bearer class may be determined based on class identifying criterion. The class identifying criterion may comprise at least one of channel quality information, mobility information, traffic identifier information, slice identifier information, location information, subscriber identifier information and data usage information.

The method may comprise providing, from the controller to the radio access network node, information indicating at least one class identifying criterion for use at the radio access network node in determining whether a user equipment or bearer belongs to the at least one user equipment or bearer class.

The first step, T1, of a method as shown in Figure 6 comprises receiving, from a controller at a radio access network node, a control action, the control action comprising an indication that it is applicable to at least one user equipment or bearer class.

The method as described with reference to Figure 6 may comprise receiving, from the controller at the radio access network node, information indicating at least one class identifying criterion and determining at the radio access network node whether a user equipment or bearer belongs to the at least one user equipment or bearer class based on the information.

The RAN node may provide an indication to the controller of whether the user equipment or bearer belongs to the at least one user equipment or bearer class

A method as shown in Figure 5 may be performed at a controller, e.g. xRAN controller 418. A method as shown in Figure 6 may be performed at a RAN node, e.g. a node 402 (eNB, gNB) of a RAN or cloud RAN.

A method as described with reference to Figures 5 or 6 may include a signalling exchange between a controller and RAN node. The signalling exchange may be used to determine the groups (or classes) of UEs or bearers for which the controller will do the classification, and the groups (or classes) of UEs or bearers for which RAN will do the classification. At least two modes may be supported, a first mode and a second mode as described above. A "mixed mode" may be used, i.e. a first mode (Mode 1) for some classes and a second mode (Mode 2) for some classes.

That is, the at least one user equipment or bearer class may be one of a plurality of user equipment or bearer classes. Each of the plurality of user equipment or bearer classes may be in a first mode or a second mode. In the first mode the controller determines whether a user equipment or bearer belongs to a class. In the second mode the radio access network node determines whether a user equipment or bearer belongs to a class.

A method may comprise providing, from a controller to a radio access network node, information comprising an indication of whether a user equipment or bearer class belongs to a first mode or a second mode.

At suitable events (e.g. new UE connection, or UE incoming handover, or new measurement report received, etc), a group may be determined for a UE, i.e. the UE is classified into appropriate classes.

If the user equipment or bearer class belongs to the first mode, the method may comprise determining the class for a user equipment or bearer at the controller. The controller may be determine more than one class (or a set of classes) for a UE. An indication of the determined class may be provided by the controller to the radio access network. In an example, the controller notifies the RAN node of the classes that each UE belongs to. RAN may then follow the UE classification as made by the controller.

The class for a user equipment may be determined based on measurements or indications received from the radio access network node. The measurements may be based on sources other than the RAN node, e.g. network probes or deep packet inspection (DPI).

For example, the controller may decide, based on measurement reports forwarded by the RAN node to the controller, that a certain UE is to be classified as a "cell-edge UE" rather than a "cell center" UE.

Alternatively or in addition, the controller may decide, based on indications of bearer setups or QoS attributes received from RAN (or data received from other sources such as probes or DPI) that a given UE or bearer should be treated as belonging to a certain high-priority class based on the UE's traffic.

In the first mode, the controller has granular control. This may incur latency since the classification can only be decided by the controller after it has received all relevant measurements/indications from the RAN or other sources.

In the second mode, RAN node determines the classification of individual UEs. That is, the class for a user equipment or bearer may be determined at the RAN node. The RAN node may determine more than one class (or a set of classes) for a UE.

In the second mode, a controller may provide an indication of modifications of the criteria used by the RAN node to decide the classification of UEs.

For example, RAN may decide that a certain UE should be classified as a "cell edge UE" based on thresholds of the CQI or RSRP/RSRQ etc. The controller may indicate to the RAN the type of measurement that should be used (CQI or RSRP etc.), and the value of the threshold that should be used, etc.

The indication of the class to which a control action is applicable may comprise a qualifier or class identifier indicating which class(es) of UEs that action should be applied to.

Each class may be identified by an integer from {1...N} or other symbolic indicators e.g. {a, b, c}. The qualifier may contain either a list of integers, or set expressions (union/intersection/set difference etc) of class indicators, or "ANY"/"ALL" indicators (similar to union/intersection). Set expressions may be useful if a UE belongs to different classes, and it is desired to allow actions that should apply only to e.g. UEs that belong to all of the indicated classes (intersection) or any of the indicated classes, etc.

Some class identifiers may be standardized. Some class identifiers may be determined dynamically. The controller and RAN may have a signaling exchange to establish the class identifiers. The method may comprise exchanging class identifier information between the controller and the RAN node.

A controller may provide a message to RAN node to add/modify/delete a class identifier for each class. RAN maintains a list of currently operational class identifiers, and modifies the list per messages from controller. The RAN node may or may not actually know the "meaning" of each class identifier.

The RAN may provide radio access network capability information to the controller. A standardized set of RAN UE-classification capabilities may be defined, and a RAN node (eNB/gNB) may provide to a controller its supported classification capabilities. Determining whether a user equipment or bearer class belongs to the first mode or the second mode may be based in the radio access network capability information. A common understanding between the RAN and Controller on the types of classifications that the RAN is capable of may then be established.

Although the above has been described primarily with relation to UEs, it may be desirable to also enable the controller to indicate to the RAN control actions at the granularity of bearers or flows rather than for UEs. For example, the controller may indicate that certain thresholds (e.g. packet discard or delay thresholds) should be applied to certain groups/classes of bearers. The previously described procedures can be equally applied at the granularity of groups/classes of flows/bearers rather than (or in addition to) at the granularity of groups/classes of UEs.

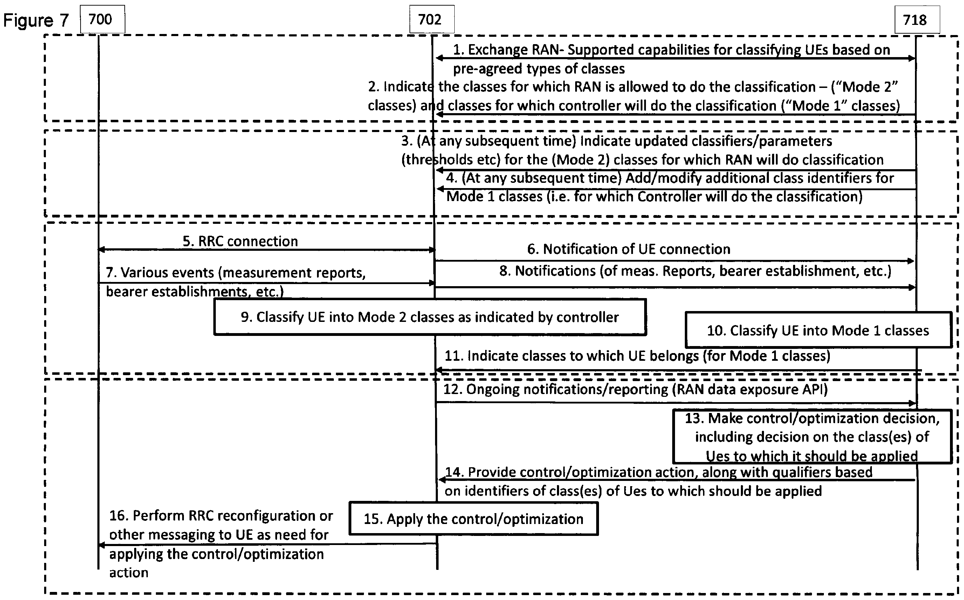

Figure 7 shows an example signalling flow between a controller 718, a RAN 702 and a UE 700 which may be used in accordance with an example. In a first signalling exchange, the controller 718 and RAN 702 exchange RAN supported capabilities for classifying UEs 700 based on pre-agreed types of classes. The controller 718 then indicates the classes which are Mode 1 and Mode 2 classes.

In a signalling exchange at any subsequent time, the controller 718 may indicate updated classifiers or parameters (e.g., thresholds etc.) for the Mode 2 classes. The controller 718 may add/modify additional class identifiers for Mode 1 classes.

At a new connection establishment (or any other suitable event), the UEs 700 are classified as agreed. For Mode 1 classes, the controller 718 indicates the classes to which the UE 700 belongs to the RAN 702.

When communicating control actions, the controller 718 provides the control action, along with qualifiers based identifiers of class(es) of UEs to which the control action should be applied.

A method as described herein may enable operators to apply differentiated behaviors to different types of UEs or bearers.

Support of different types of RAN nodes may be provided. (For example, nodes which are more intelligent have more capabilities for classification, as well as those nodes which are less intelligent and provide fewer capabilities for classification). The ability of the controller to optimize the behaviour of the RAN may be improved.

The method may be implemented in a control apparatus as described with reference to Figure 3. Control functions may comprise providing, from a controller to a radio access network node, a control action, the control action comprising an indication that it is applicable to at least one user equipment or bearer class.

Alternatively, or in addition, control functions may comprise receiving, from a controller at a radio access network node, a control action, the control action comprising an indication that it is applicable to at least one user equipment or bearer class It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to xRAN architecture, similar principles can be applied in relation to other networks and communication systems where the RAN is controlled by a controller. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

## Claims

1. A method comprising:
providing, from a controller (718) to a radio access network node (702), a control action, the control action comprising an indication that it is applicable to at least one user equipment or bearer group, wherein the at least one user equipment or bearer group is one of a plurality of user equipment or bearer groups, and each of the plurality of user equipment or bearer groups is in a first mode or a second mode, wherein in the first mode the controller determines and in the second mode the radio access network determines, whether a user equipment or bearer belongs to the at least one user equipment or bearer group;
receiving, at the controller, from the radio access network node, radio access network node supported UE-classification capability information; and determining at the controller whether the at least one user equipment or bearer group belongs to the first mode or the second mode based on the radio access network supported UE-classification capability information;
providing, from the controller to the radio access network node, information comprising an indication of whether the user equipment or bearer group belongs to the first mode or the second mode; and
if the at least one user equipment or bearer group belongs to the first mode, determining at the controller whether a user equipment (700) or bearer belongs to the at least one user equipment or bearer group.

2. A method according to claim 1, comprising:
determining, at the controller, whether the user equipment belongs to the at least one user equipment or bearer group; and
providing, from the controller to the radio access network node, an indication of whether the user equipment or bearer belongs to the at least one user equipment or bearer group.

3. A method according to claim 1 or claim 2, wherein whether the user equipment or bearer belongs to the at least one user equipment or bearer group is determined based on group identifying criterion and the group identifying criterion comprises at least one of channel quality information, mobility information, traffic identifier information, slice identifier information, location information, subscriber identifier information and data usage information.

4. A method according to claim 3, comprising:
providing, from the controller to the radio access network node, information indicating at least one group identifying criterion.

5. A method according to claims 1 to 4 comprising providing group identifier information from the controller to the radio access network node.

6. A method comprising:
receiving, from a controller (718) at a radio access network node (702), a control action, the control action comprising an indication that it is applicable to at least one user equipment or bearer group, wherein the at least one user equipment or bearer group is one of a plurality of user equipment or bearer groups, and each of the plurality of user equipment or bearer groups is in a first mode or a second mode, wherein in the first mode the controller determines and in the second mode the radio access network determines, whether a user equipment or bearer belongs to the at least one user equipment or bearer group;
providing, from the radio access network node to the controller, radio access network node supported UE-classification capability information;
receiving, at the radio access network node, from the controller, information comprising an indication of whether the at least one user equipment or bearer group belongs to the first mode or the second mode; and
if the at least one user equipment or bearer group belongs to the second mode, determining at the radio access network node whether the user equipment (700) or bearer belongs to the at least one user equipment or bearer group.

7. A method according to claim 6, wherein whether the user equipment or bearer belongs to the at least one user equipment or bearer group is determined based on group identifying criterion and the group identifying criterion comprises at least one of channel quality information, mobility information, traffic identifier information, slice identifier information, location information, subscriber identifier information and data usage information.

8. A method according to claim 7, comprising:
receiving, from the controller at the radio access network node, information indicating at least one group identifying criterion; and
determining at the radio access network node whether the user equipment or bearer belongs to the at least one user equipment or bearer class based on the information.

9. A controller comprising means for performing a method according to any one of claims 1 to 5.

10. A radio access network node comprising means for performing a method according to any of claims 6 to 8.

11. A computer program product for a controller, comprising software code portions for performing the steps of any of claims 1 to 5 when said product is run on the controller

12. A computer program product for a radio access network node comprising software code portions for performing the steps of any of claims 6 to 8 when said product is run on the radio access network node

## Patentansprüche

1. Verfahren, das Folgendes umfasst:
Bereitstellen einer Steueraktion von einer Steuerung (718) für einen Funkzugangsnetzwerkknoten (702), wobei die Steueraktion eine Anzeige umfasst, dass sie auf mindestens eine Teilnehmereinrichtung oder Trägergruppe anwendbar ist, wobei die mindestens eine Teilnehmereinrichtung oder Trägergruppe eine von einer Vielzahl von Teilnehmereinrichtungen oder Trägergruppen ist und sich jede der Vielzahl von Teilnehmereinrichtungen oder Trägergruppen in einem ersten Modus oder einem zweiten Modus befindet, wobei im ersten Modus die Steuerung bestimmt und im zweiten Modus das Funkzugangsnetzwerk bestimmt, ob eine Teilnehmereinrichtung oder ein Träger zu der mindestens einen Teilnehmereinrichtung oder Trägergruppe gehört;
Empfangen von Informationen zu einer von einem Funkzugangsnetzwerkknoten unterstützten UE-Klassifizierungsfähigkeit an der Steuerung vom Funkzugangsnetzwerkknoten; und
Bestimmen an der Steuerung auf Basis der Informationen zu der von einem Funkzugangsnetzwerk unterstützten UE-Klassifizierungsfähigkeit, ob die mindestens eine Teilnehmereinrichtung oder Trägergruppe zum ersten Modus oder zum zweiten Modus gehört;
Bereitstellen von Informationen, die eine Anzeige dazu umfassen, ob die Teilnehmereinrichtung oder Trägergruppe zum ersten Modus oder zum zweiten Modus gehört, durch die Steuerung für den Funkzugangsnetzwerkknoten; und
wenn die mindestens eine Teilnehmereinrichtung oder Trägergruppe zum ersten Modus gehört, Bestimmen an der Steuerung, ob eine Teilnehmereinrichtung (700) oder ein Träger zu der mindestens einen Teilnehmereinrichtung oder Trägergruppe gehört.

2. Verfahren nach Anspruch 1, das Folgendes umfasst:
Bestimmen an der Steuerung, ob die Teilnehmereinrichtung zu der mindestens einen Teilnehmereinrichtung oder Trägergruppe gehört; und
Bereitstellen einer Anzeige dazu, ob die Teilnehmereinrichtung oder der Träger zu der mindestens einen Teilnehmereinrichtung oder Trägergruppe gehört, durch die Steuerung für den Funkzugangsnetzwerkknoten.

3. Verfahren nach Anspruch 1 oder Anspruch 2, wobei ob die Teilnehmereinrichtung oder der Träger zu der mindestens einen Teilnehmereinrichtung oder Trägergruppe gehört, auf Basis eines Gruppenidentifikationskriteriums basiert und das Gruppenidentifikationskriterium mindestens eines von Kanalqualitätsinformationen, Mobilitätsinformationen, Verkehrskennungsinformationen, Scheibenkennungsinformationen, Standortinformationen, Teilnehmerkennungsinformationen und Datennutzungsinformationen umfasst.

4. Verfahren nach Anspruch 3, das Folgendes umfasst:
Bereitstellen von Informationen, die mindestens ein Gruppenidentifikationskriterium anzeigen, durch die Steuerung für den Funkzugangsnetzwerkknoten.

5. Verfahren nach einem der Ansprüche 1 bis 4, das das Bereitstellen von Gruppenkennungsinformationen durch die Steuerung für den Funkzugangsnetzwerkknoten umfasst.

6. Verfahren, das Folgendes umfasst:
Empfangen einer Steueraktion an einem Funkzugangsnetzwerkknoten (702) von einer Steuerung (718), wobei die Steueraktion eine Anzeige umfasst, dass sie auf mindestens eine Teilnehmereinrichtung oder Trägergruppe anwendbar ist, wobei die mindestens eine Teilnehmereinrichtung oder Trägergruppe eine von einer Vielzahl von Teilnehmereinrichtungen oder Trägergruppen ist und sich jede der Vielzahl von Teilnehmereinrichtungen oder Trägergruppen in einem ersten Modus oder einem zweiten Modus befindet, wobei im ersten Modus die Steuerung bestimmt und im zweiten Modus das Funkzugangsnetzwerk bestimmt, ob eine Teilnehmereinrichtung oder ein Träger zu der mindestens einen Teilnehmereinrichtung oder Trägergruppe gehört;
Bereitstellen von Informationen zu einer von einem Funkzugangsnetzwerkknoten unterstützten UE-Klassifizierungsfähigkeit durch den Funkzugangsnetzwerkknoten für die Steuerung;
Empfangen von Informationen, die eine Anzeige dazu umfassen, ob die mindestens eine Teilnehmereinrichtung oder Trägergruppe zum ersten Modus oder zum zweiten Modus gehört, am Funkzugangsnetzwerkknoten von der Steuerung; und
wenn die mindestens eine Teilnehmereinrichtung oder Trägergruppe zum zweiten Modus gehört, Bestimmen am Funkzugangsnetzwerkknoten, ob die Teilnehmereinrichtung (700) oder der Träger zu der mindestens einen Teilnehmereinrichtung oder Trägergruppe gehört.

7. Verfahren nach Anspruch 6, wobei ob die Teilnehmereinrichtung oder der Träger zu der mindestens einen Teilnehmereinrichtung oder Trägergruppe gehört, auf Basis eines Gruppenidentifikationskriteriums basiert und das Gruppenidentifikationskriterium mindestens eines von Kanalqualitätsinformationen, Mobilitätsinformationen, Verkehrskennungsinformationen, Scheibenkennungsinformationen, Standortinformationen, Teilnehmerkennungsinformationen und Datennutzungsinformationen umfasst.

8. Verfahren nach Anspruch 7, das Folgendes umfasst:
Empfangen von Informationen, die mindestens ein Gruppenidentifikationskriterium anzeigen, von der Steuerung am Funkzugangsnetzwerkknoten; und
Bestimmen am Funkzugangsnetzwerkknoten auf Basis der Informationen, ob die Teilnehmereinrichtung oder der Träger zu der mindestens einen Teilnehmereinrichtung oder Trägerklasse gehört.

9. Steuerung, die ein Mittel zum Durchführen eines Verfahrens nach einem der Ansprüche 1 bis 5 umfasst.

10. Funkzugangsnetzwerkknoten, der Mittel zum Durchführen eines Verfahrens nach einem der Ansprüche 6 bis 8 umfasst.

11. Computerprogrammprodukt für eine Steuerung, das Softwarecodeabschnitte zum Durchführen der Schritte nach einem der Ansprüche 1 bis 5, wenn das Produkt auf der Steuerung ausgeführt wird, umfasst.

12. Computerprogrammprodukt für einen Funkzugangsnetzwerkknoten, das Softwarecodeabschnitte zum Durchführen der Schritte nach einem der Ansprüche 6 bis 8, wenn das Produkt auf dem Funkzugangsnetzwerkknoten ausgeführt wird, umfasst.

## Revendications

1. Procédé comprenant :
la fourniture, d'un dispositif de commande (718) à un nœud de réseau d'accès radio (702), d'une action de commande, l'action de commande comprenant une indication qu'elle est applicable à au moins un groupe d'équipements utilisateur ou de porteuses, dans lequel l'au moins un groupe d'équipements utilisateur ou de porteuses est l'un parmi une pluralité de groupes d'équipements utilisateur ou de porteuses, et chacun de la pluralité de groupes d'équipements utilisateur ou de porteuses est dans un premier mode ou un second mode, dans lequel dans le premier mode le dispositif de commande détermine et dans le second mode le réseau d'accès radio détermine, si un équipement utilisateur ou une porteuse appartient à l'au moins un groupe d'équipements utilisateur ou de porteuses ;
la réception, au niveau du dispositif de commande, à partir du nœud de réseau d'accès radio, d'informations de capacité de classification d'UE prise en charge par un nœud de réseau d'accès radio ; et
la détermination, au niveau du dispositif de commande, de si l'au moins un groupe d'équipements utilisateur ou de porteuses appartient au premier mode ou au second mode sur la base des informations de capacité de classification d'UE prise en charge par un nœud de réseau d'accès radio ;
la fourniture, du dispositif de commande au nœud de réseau d'accès radio, d'informations comprenant une indication de si le groupe d'équipements utilisateur ou de porteuses appartient au premier mode ou au second mode ; et
si l'au moins un groupe d'équipements utilisateur ou de porteuses appartient au premier mode, la détermination, au niveau du dispositif de commande, de si un équipement utilisateur (700) ou une porteuse appartient à l'au moins un groupe d'équipements utilisateur ou de porteuses.

2. Procédé selon la revendication 1, comprenant :
la détermination, au niveau du dispositif de commande, de si l'équipement utilisateur appartient à l'au moins un groupe d'équipements utilisateur ou de porteuses ; et
la fourniture, du dispositif de commande au nœud de réseau d'accès radio, d'une indication de si l'équipement utilisateur ou la porteuse appartient à l'au moins un groupe d'équipements utilisateur ou de porteuses.

3. Procédé selon la revendication 1 ou la revendication 2, dans lequel le fait de savoir si l'équipement utilisateur ou la porteuse appartient à l'au moins un groupe d'équipements utilisateur ou de porteuses est déterminé sur la base d'un critère d'identification de groupe et le critère d'identification de groupe comprend au moins des informations parmi des informations de qualité de canal, des informations de mobilité, des informations d'identifiant de trafic, des informations d'identifiant de tranche, des informations d'emplacement, des informations d'identifiant d'abonné et des informations d'utilisation de données.

4. Procédé selon la revendication 3, comprenant :
la fourniture, du dispositif de commande au nœud de réseau d'accès radio, d'informations indiquant au moins un critère d'identification de groupe.

5. Procédé selon les revendications 1 à 4 comprenant la fourniture d'informations d'identifiant de groupe du dispositif de commande au nœud de réseau d'accès radio.

6. Procédé comprenant :
la réception, à partir d'un dispositif de commande (718) au niveau d'un nœud de réseau d'accès radio (702), d'une action de commande, l'action de commande comprenant une indication qu'elle est applicable à au moins un groupe d'équipements utilisateur ou de porteuses, dans lequel l'au moins un groupe d'équipements utilisateur ou de porteuses est l'un parmi une pluralité de groupes d'équipements utilisateur ou de porteuses, et chacun de la pluralité de groupes d'équipements utilisateur ou de porteuses est dans un premier mode ou un second mode, dans lequel dans le premier mode le dispositif de commande détermine et dans le second mode le réseau d'accès radio détermine, si un équipement utilisateur ou une porteuse appartient à l'au moins un groupe d'équipements utilisateur ou de porteuses ;
la fourniture, du nœud de réseau d'accès radio au dispositif de commande, d'informations de capacité de classification d'UE prise en charge par un nœud de réseau d'accès radio ;
la réception, au niveau du nœud de réseau d'accès radio, à partir du dispositif de commande, d'informations comprenant une indication de si l'au moins un groupe d'équipements utilisateur ou de porteuses appartient au premier mode ou au second mode ; et
si l'au moins un groupe d'équipements utilisateur ou de porteuses appartient au second mode, la détermination, au niveau du nœud de réseau d'accès radio, de si l'équipement utilisateur (700) ou la porteuse appartient à l'au moins un groupe d'équipements utilisateur ou de porteuses.

7. Procédé selon la revendication 6, dans lequel le fait de savoir si l'équipement utilisateur ou la porteuse appartient à l'au moins un groupe d'équipements utilisateur ou de porteuses est déterminé sur la base d'un critère d'identification de groupe et le critère d'identification de groupe comprend au moins des informations parmi des informations de qualité de canal, des informations de mobilité, des informations d'identifiant de trafic, des informations d'identifiant de tranche, des informations d'emplacement, des informations d'identifiant d'abonné et des informations d'utilisation de données.

8. Procédé selon la revendication 7, comprenant :
la réception, à partir du dispositif de commande au niveau du nœud de réseau d'accès radio, d'informations indiquant au moins un critère d'identification de groupe ; et
la détermination, au niveau du nœud de réseau d'accès radio, de si l'équipement utilisateur ou la porteuse appartient à l'au moins une classe d'équipements utilisateur ou de porteuses sur la base des informations.

9. Dispositif de commande comprenant des moyens pour réaliser un procédé selon l'une quelconque des revendications 1 à 5.

10. Nœud de réseau d'accès radio comprenant des moyens pour réaliser un procédé selon l'une quelconque des revendications 6 à 8.

11. Produit programme informatique pour un dispositif de commande, comprenant des parties de code logiciel pour réaliser les étapes selon l'une quelconque des revendications 1 à 5 lorsque ledit produit est exécuté sur le dispositif de commande.

12. Produit programme informatique pour un nœud de réseau d'accès radio, comprenant des parties de code logiciel pour réaliser les étapes selon l'une quelconque des revendications 6 à 8 lorsque ledit produit est exécuté sur le nœud de réseau d'accès radio.
